# EUROPEAN PATENT APPLICATION

(11) **EP 4 772 090 A1**
(43) Date of publication of application: **08.07.2026**
(21) Application number: 25869661.6
(22) Date of filing: 12.03.2025
(51) Int. Cl.: A47J 37/06

(54) **COOKING APPLIANCE**

(30) Priority: 14.10.2024 CN 202411434259
(71) Applicant: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: SHEN, Guoyang, Foshan, Guangdong 528311 (CN); REN, Mengke, Foshan, Guangdong 528311 (CN); WANG, Shuan, Foshan, Guangdong 528311 (CN); RAO, Jie, Foshan, Guangdong 528311 (CN)
(74) Representative: RGTH
(86) International application number: PCT/CN2025/082129
(87) International publication number: WO 2026/081404

(57) **Abstract**

Provided is a cooking appliance (100). The cooking appliance (100) includes a housing (10) and a hot air assembly (30). The housing (10) includes a door (20) and a cooking chamber (11). The door (20) is configured to open or close the cooking chamber (11). The cooking chamber (11) has an air inlet region (142) and an air outlet region (141) that are located on a top plate (14) of the cooking chamber (11). The air inlet region (142) is positioned farther away from the door (20) than the air outlet region (141). The hot air assembly (30) includes a flow guide plate (33), an impeller (34), a drive member (32), and a heating element (35). The flow guide plate (33) is disposed on a side of the top plate (14) away from the cooking chamber (11), a heating chamber (36) is defined by the flow guide plate (33) and the top plate (14). Each of the air inlet region (142) and the air outlet region (141) is in communication with the heating chamber (36). The impeller (34) is rotatably disposed in the heating chamber (36) to drive airflow to flow towards the air inlet region (142) from the air outlet region (141). A rotation axis of the impeller (34) is perpendicular to the top plate (14). The drive member (32) is disposed on an outer side of the heating chamber (36). A rotary shaft of the drive member (32) extends through the flow guide plate (33) and is connected to the impeller (34). The heating element (35) is disposed in the heating chamber (36) and located between the impeller (34) and the air inlet region (142). Since the air inlet region (142) is positioned farther from the door (20) than the air outlet region (141), an impact of high-temperature airflow on the door (20) is reduced, thereby alleviating a problem of excessive temperature rise in the door (20).

## Description

### CROSS-REFERENCE TO RELATED APPLICATION

This application claims priority and benefit from Chinese Patent Application No. 202411434259.7, entitled "COOKING APPLIANCE", and filed with China National Intellectual Property Administration on October 14, 2024, the entire disclosure of which is incorporated herein by reference.

### FIELD

The present disclosure relates to the field of cooking device technologies, and more particularly, to a cooking appliance.

### BACKGROUND

This section provides only background information relevant to the present disclosure and is not necessarily the related art.

In a cooking appliance with a hot air function, a hot air assembly is typically disposed on a top of a cooking chamber and configured to blow hot air into the cooking chamber from top to bottom during operation of the hot air assembly to cook food by means of the hot air.

However, during cooking of the food, the hot air inside the cooking chamber tends to cause excessive temperature rise in a door of the cooking appliance, and the door with the excessive temperature rise is likely to scald a user.

### SUMMARY

The present disclosure aims to at least solve a problem of excessive temperature rise in a door of a cooking appliance, which is achieved through the following technical solutions.

Embodiments of the present disclosure provide a cooking appliance. The cooking appliance comprises a housing, a door, and a hot air assembly. The housing comprises a cooking chamber. The cooking chamber has an air inlet region and an air outlet region that are provided on a top plate of the cooking chamber. The door is connected to the housing and configured to open or close the cooking chamber. The air inlet region is positioned farther away from the door than the air outlet region. The hot air assembly comprises a flow guide plate, an impeller, a driver member, and a heating member. The flow guide plate is disposed on a side of the top plate away from the cooking chamber, and a heating chamber is defined by the flow guide plate and the top plate. Each of the air inlet region and the air outlet region is in communication with the heating chamber. The impeller is rotatably disposed in the heating chamber to drive airflow to flow towards the air inlet region from the air outlet region. A rotation axis of the impeller is perpendicular to the top plate. The drive member is disposed on an outer side of the heating chamber. A rotary shaft of the drive member extends through the flow guide plate and is connected to the impeller. The heating element is disposed in the heating chamber and located between the impeller and the air inlet region.

According to the cooking appliance of the present disclosure, during operation of the hot air assembly, the heating element operates, and the drive member can drive the impeller to rotate in the heating chamber to allow air inside the cooking chamber to flow into the heating chamber through the air outlet region towards the air inlet region. When airflow passes through the heating element, the airflow is heated by the heating element to form high-temperature airflow. The high-temperature airflow flows into the cooking chamber through the air inlet region, and food inside the cooking chamber is heated and cooked by the high-temperature airflow flowing into the cooking chamber.

Since the air inlet region is positioned farther away from the door than the air outlet region, an impact of the high-temperature airflow on the door can be reduced, alleviating the problem of the excessive temperature rise in the door. As a result, occurrence of a user being scalded by the door due to such excessive temperature rise is reduced.

In addition, the cooking appliance according to embodiments of the present disclosure may also provide the following additional technical features.

In some embodiments of the present disclosure, the flow guide plate has a cavity with an opening. The opening is closed by the top plate, and the heating chamber is defined by the top plate and the cavity. The cavity comprises a first section and a second section connected to the first section. The first section is in communication with the air outlet region. The impeller is at least partially disposed in the first section, and a distance between a side wall of the first section and the impeller is progressively increased in a rotation direction of the impeller. The second section is in communication with the air inlet region, and the heating element is disposed on the second section.

In some embodiments of the present disclosure, the side wall of the first section is an arc-shaped wall. In a first direction, a first distance exists between the rotation axis of the impeller and a first side of the arc-shaped wall, and a second distance exists between the rotation axis of the impeller and a second side of the arc-shaped wall. A ratio of the second distance to the first distance ranges from 1 to 1.5. The first direction is consistent with a length direction of the housing.

In some embodiments of the present disclosure, the first section has a first connection end on a side of the first section facing the second section, and the first connection end is of a flared structure. The second section has a second connection end on a side of the second section facing the first section, and the second connection end is connected to the first connection end.

In some embodiments of the present disclosure, the rotation axis of the impeller extends through a center of the air outlet region.

In some embodiments of the present disclosure, the flow guide plate is provided with a recessed structure on a side of the flow guide plate away from the heating chamber. The drive member is at least partially received in the recessed structure.

In some embodiments of the present disclosure, the recessed structure is provided with a protrusion structure formed on a side of the flow guide plate facing the top plate. The impeller has a receiving groove. The protrusion structure is at least partially received in the receiving groove.

In some embodiments of the present disclosure, the heating element comprises at least one heating tube extending in a first direction. The first direction is consistent with a length direction of the housing.

In some embodiments of the present disclosure, the at least one heating tube comprises at least two heating tubes arranged in a second direction. The second direction is consistent with a width direction of the housing.

In some embodiments of the present disclosure, the housing comprises a front plate having an access opening. The access opening is in communication with the cooking chamber to allow a user to place food in the cooking chamber or remove food from the cooking chamber. The door is pivotally connected to the front plate and configured to expose or cover the access opening. The air inlet region is positioned farther away from the front plate than the air outlet region. A minimum distance between the front plate and the heating tube ranging from150 mm to 190 mm.

In some embodiments of the present disclosure, the housing comprises a rear plate spaced apart from the front plate in a second direction. The air inlet region is positioned closer to the door than the air outlet region. A distance between the air inlet region and the rear plate ranges from 0 mm to 25 mm. The second direction is consistent with a width direction of the housing.

In some embodiments of the present disclosure, the air outlet region has a plurality of air outlet holes uniformly distributed in the air outlet region; and/or the air inlet region has a plurality of air inlet holes uniformly distributed in the air inlet region.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals.
FIG. 1 schematically illustrates a structural view of a cooking appliance according to an embodiment of the present disclosure.
FIG. 2 is a schematic partial structural view of the cooking appliance shown in FIG. 1.
FIG. 3 is a schematic structural view of the cooking appliance shown in FIG. 2 from a second perspective.
FIG. 4 is a schematic structural view of the cooking appliance shown in FIG. 2 from a third perspective.
FIG. 5 is a cross-sectional view taken along A-A of the cooking appliance shown in FIG. 4 (thick black arrow lines indicate an airflow direction).
FIG. 6 is a schematic enlarged structural view of part B of the structure shown in FIG. 5.
FIG. 7 is a schematic exploded structural view of a hot air assembly of the cooking appliance shown in FIG. 2.
FIG. 8 is a schematic view of a flow guide plate of the hot air assembly shown in FIG. 7 (showing a side of the flow guide plate facing a top plate of a cooking chamber, where thick arrow lines indicate a rotation direction of an impeller).
FIG. 9 is a schematic structural view of the flow guide plate shown in FIG. 8 from a second perspective (showing a side of the flow guide plate facing the top plate of the cooking chamber).
FIG. 10 is a schematic structural view of the flow guide plate shown in FIG. 8 from a third perspective (showing a side of the flow guide plate away from the top plate of the cooking chamber).
FIG. 11 is a schematic structural view of a top plate of a cooking chamber shown in FIG. 3 (showing a side of the top plate facing the cooking chamber).
FIG. 12 is a schematic structural view of the top plate shown in FIG. 11 from a second perspective (showing a side of the top plate away from the cooking chamber).
FIG. 13 is a schematic structural view of the top plate shown in FIG. 11 from a third-person perspective.

### Reference numerals:

100, cooking appliance;
10, housing;
11, cooking chamber; 12, front plate; 121, access opening; 13, rear plate; 14, top plate; 141, air outlet region; 1411, air outlet hole; 142, air inlet region; 1421, air inlet hole;
20, door;
30, hot air assembly;
31, heat shield; 32, drive member; 33, flow guide plate; 331, cavity; 3311, first section; 3312, second section; 3313, protrusion structure; 3314, arc-shaped wall; 3315, recessed structure; 332, mounting hole; 34, impeller; 35, heating element; 36, heating chamber;
a, first distance; b, second distance; L, first predetermined distance; D, second predetermined distance; X, first direction; Y, second direction.

### DETAILED DESCRIPTION OF THE EMBODIMENTS

Exemplary implementations of the present disclosure will be described in detail below with reference to the accompanying drawings. Although the exemplary embodiments of the present disclosure are illustrated in the accompanying drawings, it should be understood that the present disclosure may be embodied in various forms and should not be construed as limited to the embodiments described herein. Instead, these embodiments are provided for a thorough understanding of the present disclosure, and can fully convey the scope of the present disclosure to those skilled in the art.

It should be understood that terms used herein are intended to describe particular exemplary embodiments only and are not intended to be limited thereto. Unless the context clearly indicates, otherwise singular forms of "a", "one", and "said" as used herein can also be interpreted as comprising plural forms. Terms "comprise", "contain", and "have" are inclusive and therefore specify the presence of stated features, elements, and/or components, but do not preclude the presence or an addition of one or more other features, elements, components, and/or a combination thereof. The method steps, processes, and operations described herein are not to be construed as necessitating that they be performed in a particular order described or illustrated, unless the order of performance is clearly indicated. It should also be understood that additional or alternative steps may be used.

Although terms "first", "second", "third", etc. may be used herein to describe multiple elements, components, regions, layers, and/or sections, these elements, components, regions, layers, and/or sections should not be limited by these terms. These terms may only be used to distinguish one element, component, region, layer, or section from another region, layer, or section. The terms such as "first", "second", or the like do not imply a sequence or an order when used herein, unless specified otherwise. Therefore, a first element, component, region, layer, or section discussed below may be represented as a second element, component, region, layer, or section, without departing from the teachings of exemplary implementations.

For ease of description, spatially relative terms, such as "internal," "external," "inside," "outside," "beneath," "below," "on," and "below," may be used herein to describe a relation of one element or feature illustrated in the figures to another element or feature illustrated in the figures. These spatially relative terms are intended to comprise different orientations of devices in use or operation other than those depicted in the figures. For example, if a device in the figure is flipped over, an element described as "under other elements or features" or "below other elements or features" will then be oriented as "on other elements or features" or "above other elements or features". Thus, the example term "below ..." may comprise orientations of above and below.

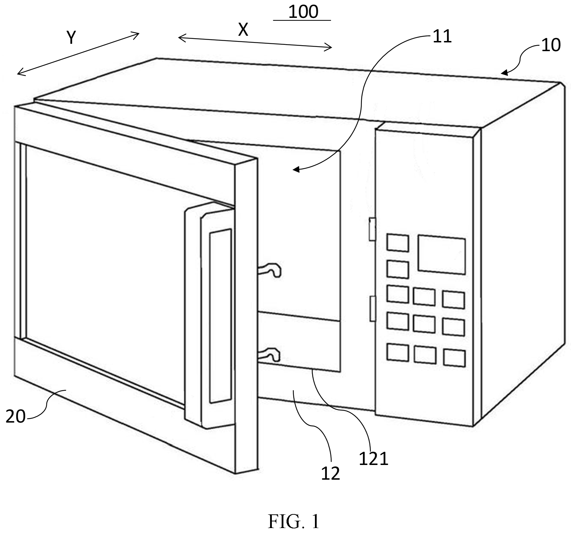

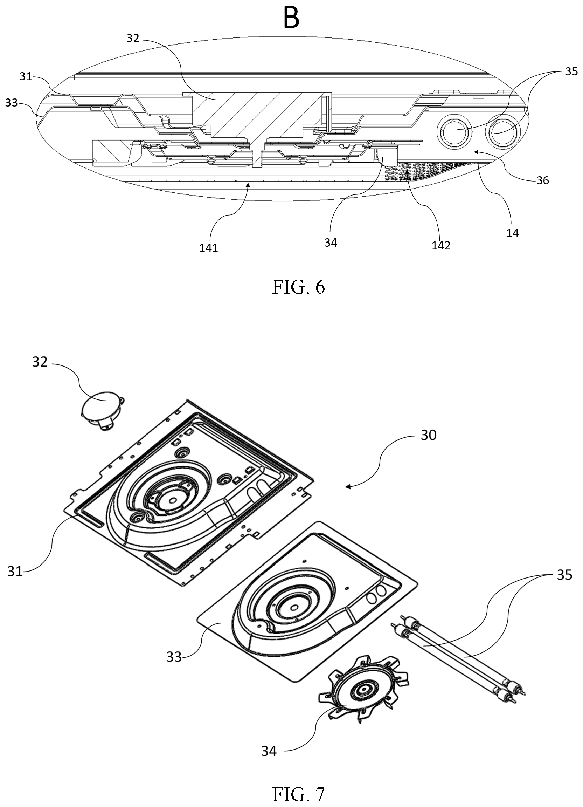

As shown in FIGS. 1 to 13, according to embodiments of the present disclosure, there is provided a cooking appliance 100. The cooking appliance 100 comprises a housing 10, a door 20, and a hot air assembly 30. The housing 10 has a cooking chamber 11. Each of the door 20 and the hot air assembly 30 is mounted at the housing 10. The door 20 is configured to open or close the cooking chamber 11. The hot air assembly 30 is configured to heat the cooking chamber 11 to allow food placed in the cooking chamber 11 to be heated and cooked.

The hot air assembly 30 comprises an impeller 34, a heating element 35, a drive member 32, and a flow guide plate 33. The cooking chamber 11 is a cavity structure with a predetermined volume, which is configured to receive the food. The cavity structure comprises a top plate 14 located on a top of the cooking chamber 11. The top plate 14 has an air outlet region 141 and an air inlet region 142. The flow guide plate 33 is located on an outer side of the cooking chamber 11, and a heating chamber 36 is defined by the flow guide plate and a side of the top plate 14 away from the cooking chamber 11. Each of the air outlet region 141 and the air inlet region 142 is in communication with the heating chamber 36. The impeller 34 is disposed in the heating chamber 36 and rotatable relative to the heating chamber 36. The top plate 14 is perpendicular to a rotation axis of the impeller 34. The drive member 32 is disposed on an outer side of the heating chamber 36 and comprises a rotary shaft. The rotary shaft extends into the heating chamber 36 through the flow guide plate 33. A part of the rotary shaft located in the heating chamber 36 is connected to the impeller 34. The heating element 35 is mounted in the heating chamber 36 and located between the air inlet region 142 and the impeller 34.

Driven by the drive member 32, the impeller 34 rotates relative to the heating chamber 36, allowing the impeller 34 to drive airflow of the cooking chamber 11 into the heating chamber 36 through the air outlet region 141. Airflow flowing into the heating chamber 36 flows in the heating chamber 36. When the airflow flowing in the heating chamber 36 passes through the heating element 35, it is heated by the heating element 35. The heated airflow then flows into the cooking chamber 11 through the air inlet region 142.

In the present disclosure, compared to the air inlet region 142, the air outlet region 141 is positioned farther away from the door 20, that is, a distance between the air inlet region 142 and the door 20 is greater than a distance between the air outlet region 141 and the door 20.

According to the cooking appliance 100 of the present disclosure, during operation of the hot air assembly 30, the heating element 35 operates, and the drive member 32 is configured to drive the impeller 34 to rotate in the heating chamber 36 to allow the air in the cooking chamber 11 to flow into the heating chamber 36 through the air outlet region 141 towards the air inlet region 142. When airflow passes through the heating element 35, the passing airflow is heated by the heating element 35 to form a high-temperature airflow. The high-temperature airflow flows into the cooking chamber 11 through the air inlet region 142, and food in the cooking chamber 11 is heated and cooked by the high-temperature airflow flowing into the cooking chamber 11.

Since the air inlet region 142 is positioned farther away from the door 20 than the air outlet region 141, an impact of the high-temperature airflow on the door 20 can be reduced, alleviating the problem of the excessive temperature rise in the door 200. As a result, occurrence of a user being scalded by the door 200 due to such excessive temperature rise is reduced.

It should be noted that in the present disclosure, the housing 10 comprises a chamber assembly and a shell. The chamber assembly defines the cooking chamber 11 by a plurality of plates. The shell is arranged around an outer side of the chamber assembly. The shell and at least part of an outer peripheral surface of the chamber assembly are spaced apart from each other. A space where the shell is spaced apart from the chamber assembly is formed as a receiving space. The hot air assembly 30 is disposed in the receiving space. Isolation of the hot air assembly 30 from an ambient environment can be realized by the hot air assembly 30 being received in the receiving space, thereby reducing an adverse effect caused by external arrangement of the hot air assembly 30 (such as scald on the user or damage to furniture).

In addition, in the present disclosure, the rotation axis of the impeller 34 is perpendicular to the top plate 14, and the impeller 34 is of a centrifugal structure, that is, the impeller 34 is configured with an axial air inflow and a radial air outflow. By configuring the impeller 34 as the centrifugal structure, a dimension of the impeller 34 can be reduced in a direction perpendicular to the top plate 14, thereby reducing a dimension of the hot air assembly 30.

In addition, the drive member 32 may be an electric motor or a motor. In the present disclosure, the drive member 32 is an electric motor, which has a simple structure and can thus effectively reduce manufacturing cost of the cooking appliance 100.

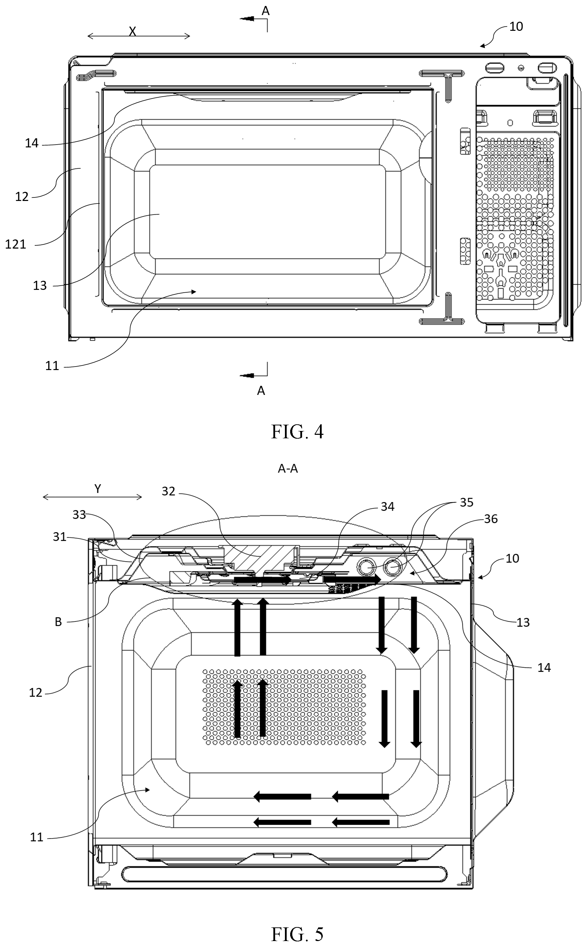

In some embodiments of the present disclosure, as shown in FIGS. 5 to 10, a cavity 331 is formed at the flow guide plate 33 through stamping. The cavity has an opening. The flow guide plate 33 abuts with a side of the top plate 14 away from the cooking chamber 11. The opening of the cavity 331 is closed by the top plate 14. A space defined by the top plate 14 and the cavity 331 is the heating chamber 36. In a second direction Y, the heating chamber 36 comprises a first section 3311 and a second section 3312 in communication with the first section 3311. The first section 3311 is positioned close to the door 20, and the second section 3312 is positioned away from the door 20.

The impeller 34 is at least partially disposed inside the first section 3311. The air outlet region 141 is in communication with the first section 3311, and the air inlet region 142 is in communication with the second section 3312. The heating element 35 is disposed in the second section 3312 and is located between the air outlet region 141 and the air inlet region 142. The impeller 34 has a rotation direction. In the rotation direction of the impeller 34, a side wall of the first section 3311 is of a flared structure. That is, the rotation direction of the impeller 34, a distance between the impeller 34 and the side wall of the first section 3311 is progressively increased.

In an exemplary embodiment of the present disclosure, the impeller 34 is of a centrifugal structure, that is, air is drawn in an axial direction of the impeller 34 and discharged in a radial direction of the impeller 34. By configuring the first section 3311, the first section 3311 can be formed into a volute structure. When the impeller 34 rotates in the first section 3311, the airflow in the cooking chamber 11 can be drawn from the air outlet region 141 and expelled radially outwards through the impeller 34, and then outputted to the second section 3312 through the space between the impeller 34 and the side wall of the first section 3311. When the airflow passes through the heating element 35, the airflow is heated by the heating element 35. The heated airflow flows into the cooking chamber 11 through the air outlet region 141 to heat and cook the food in the cooking chamber 11.

By configuring the cavity 331 such that its first section 3311 is formed into the volute structure, the impeller 34 of the centrifugal structure is at least partially housed within the volute structure. Thus, an adsorption force on the airflow can be enhanced, allowing the airflow in the cooking chamber 11 to be rapidly drawn into the heating chamber 36, then heated by the heating chamber, and sent back into the cooking chamber 11 through an air outlet. Thus, power conversion efficiency of the drive member 32 can be improved, effectively enhancing cooking efficiency.

It should be understood that in the present disclosure, the housing 10 is of a rectangular-shaped structure with a length, a width, and a height.

When the user faces the cooking appliance 100, a side of the housing 10 facing the user is defined as a front side, a side of the housing 10 away from the user is defined as a rear side, a side of the housing 10 to the user's left-hand side is defined as a left side, a side of the housing 10 to the user's right-hand side is defined as a right side, the side of the housing 10 facing a bearing surface is defined as a bottom side, and a side of the housing 10 away from the bearing surface is defined as a top side. An arrangement direction of the left side and the right side of the housing 10 is a length direction of the housing 10, an arrangement of the front side and the rear side is a width direction of the housing 10, and an arrangement of the top side and the bottom side is a height direction of the housing 10.

In addition, in the present disclosure, the second direction Y is consistent with the width direction of the housing 10.

It should be noted that the connection between the flow guide plate 33 and the top plate 14 comprises, but is not limited to bonding, welding, snap-fitting, or a connection by a connector.

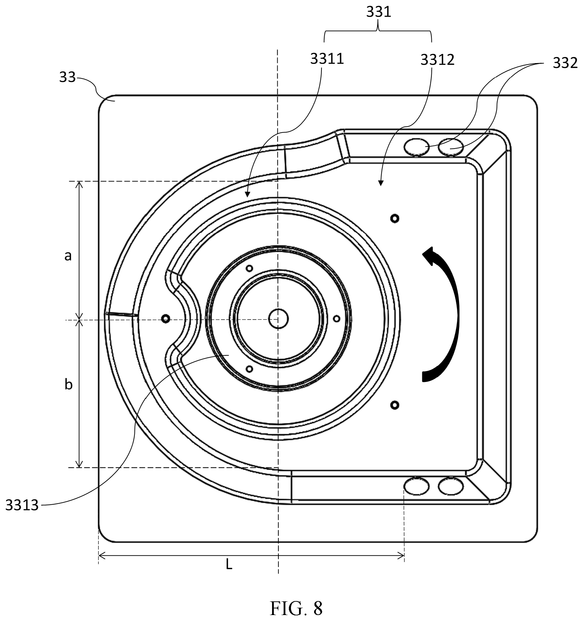

In some embodiments of the present disclosure, as shown in FIG. 8, in the cavity 331 of the flow guide plate 33, the first section 3311 and the second section 3312 are sequentially disposed in the second direction Y, the first section 3311 is located on a side close to the door 20, and the second section 3312 is located on a side away from the door 20.

The first section 3311 has a side wall that is an arc-shaped wall 3314. In a first direction X (which is consistent with the length direction of the housing 10), the arc-shaped wall 3314 has a first side and a second side. A distance between the first side of the arc-shaped wall 3314 and the rotation axis of the impeller 34 is defined as a first distance a, and a distance between the second side of the arc-shaped wall 3314 and the rotation axis of the impeller 34 is defined as a second distance b. The second distance b is greater than the first distance a, and a ratio of the second distance b to the first distance a ranges from 1 to 1.5.

By controlling the ratio of the first distance a to the second distance b, an airflow drive capability of the impeller 34 can be effectively improved, thereby effectively controlling a heating duration of the food by the hot air assembly 30.

It should be noted that in the present disclosure, the ratio of the second distance b to the first distance a may specifically be 1, 1.05, 1.08, 1.2, 1.25, 1.3, 1.35, 1.4, 1.45, or 1.5.

A detailed description is given below with specific experimental data.

During the experiment, the ratio of the second distance b to the first distance a is adjusted, and a duration required for the temperature inside the cooking chamber 11 to rise to 200°C is recorded. Reference can be made to Table 1 for details.

**[Table 1]**

| | | Duration (s) required for temperature of cooking chamber 11 to rise to 200°C |
|---|---|---|
| Comparative Example | Hot air assembly 30 in the related art | 310 |
| Example 1 | b/a=1 | 320 |
| Example 2 | b/a=1.05 | 280 |
| Example 3 | b/a=1.08 | 240 |
| Example 4 | b/a=1.2 | 270 |
| Example 5 | b/a=1.3 | 280 |
| Example 6 | b/a=1.4 | 295 |
| Example 7 | b/a=1.5 | 315 |

It can be seen from the above examples that when the value of b/a approaches 1.08, a temperature rise rate of the cooking chamber 11 is the fastest. Therefore, by reasonably controlling the value of b/a, a temperature rise duration of the cooking chamber 11 can be effectively shortened. Thus, a cooking speed is improved.

In some embodiments of the present disclosure, as shown in FIG. 8, in the cavity 331 of the flow guide plate 33, the first section 3311 and the second section 3312 are sequentially disposed in the second direction Y, the first section 3311 is located on a side close to the door 20, and the second section 3312 is located on a side away from the door 20. In the second direction Y, a side of the first section 3311 facing the second section 3312 is defined as a first connection end, and a side of the second section 3312 facing the first section 3311 is defined as a second connection end. The first connection end and the second connection end are connected to each other to form the complete side wall structure of the cavity 331.

In the first direction X, a dimension of the second connection is greater than a dimension of the first connection end, and at least one side of the first connection end is of a flared structure in the first direction X, facilitating an effective connection between the first connection end and the second connection end.

Since the first section 3311 of the cavity 331 is formed into the volute structure, by configuring the first connection end as the flared structure, the airflow can diffuse when flowing into the second section 3312 through the first section 3311, thereby increasing a contact area between the airflow and the heating element 35. As a result, the airflow can be heated quickly, improving uniformity of an airflow temperature. Thus, temperature uniformity of the high-temperature airflow flowing into the cooking chamber 11 can be effectively improved, thus enhancing cooking quality of the food.

In addition, by configuring the first connection end as the flared structure, reverse flow of airflow into the first section 3311 can be reduced, effectively allowing the airflow to flow towards the second section 3312 from the first section 3311. Thus, directionality of driving the airflow is enhanced.

As shown in FIGS. 8 to 10, in the first direction X, a side of the first connection end (a side of a second dimension of the arc-shaped wall 3314) is connected flush with a side of the second connection end, and another side of the first connection end (a side of a first dimension of the arc-shaped wall 3314) is connected to another side of the second connection end by a transition wall (of an arc-shaped structure).

In some embodiments of the present disclosure, as shown in FIG. 5, the cooking chamber 11 has an air outlet region 141 and an air inlet region 142 that are located on a top plate 14 of the cooking chamber 11. The air outlet region 141 is positioned close to the door 20, and the air inlet region 142 is positioned away from the door 20. A heating chamber 36 is defined by the flow guide plate 33 and the top plate 14. The impeller 34 is rotatably disposed in the heating chamber 36. The rotation axis of the impeller 34 is perpendicular to the top plate 14 and extends through a center of the air outlet region 141. The heating element 35 is disposed in the heating chamber 36 and is located between the air outlet region 141 and the air inlet region 142.

By configuring the rotation axis of the impeller 34 to extend through the center of the air outlet region 141, the impeller 34 is directly opposite to the air outlet region 141. The impeller 34 is of the centrifugal structure with the axial air inflow and the radial air outflow. By setting the position of the impeller 34, the distance between the air inlet region 142 and the impeller 34 can be shortened. Thus, a distance required for the cooking chamber 11 to travel into the impeller 34 from the air outlet region 141 can be reduced. As a result, air outlet efficiency of the cooking chamber 11 can be improved. Therefore, heating efficiency of the hot air assembly 30 on the cooking chamber 11 can be improved.

It should be noted that the impeller 34 has a projection on the top plate 14, and an area of the air outlet region 141 may be smaller than, equal to, or greater than an area of the projection. In the present disclosure, the area of the air outlet region 141 is slightly smaller than the area of the projection of the impeller 34 on the top plate 14, allowing the air outlet region 141 to better match the structure of the impeller 34. Thus, air outlet efficiency can be effectively improved.

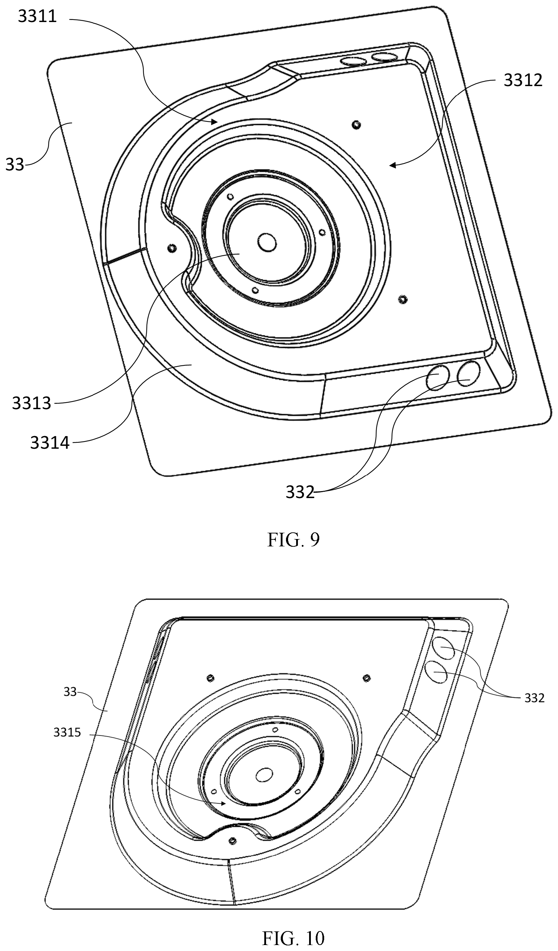

In some embodiments of the present disclosure, as shown in FIG. 10, the flow guide plate 33 is provided with a pressed portion on a side of the flow guide plate 33 away from the top plate 14, and the pressed portion is a recessed structure 3315. The drive member 32 is mounted on the side of the flow guide plate 33 away from the top plate 14, and the drive member 32 is at least partially received in the recessed structure 3315.

By providing the recessed structure 3315, the recessed structure 3315 can be utilized to receive the drive member 32, making the structure of the hot air assembly 30 more compact in the height direction of the housing 10. In this way, an ultra-thin structure of the hot air assembly 30 is realized. Thus, a space occupied in the housing 10 can be reduced, improving a space utilization rate of the housing 10.

It should be noted that in the present disclosure, the hot air assembly 30 comprises a heat shield 31 disposed on the side of the flow guide plate 33 away from the top plate 14, and the heat shield 31 covers at an outer side of the heat shield 31. By utilizing the heat shield 31 to provide heat insulation for the flow guide plate 33, heat released outwards by the heating chamber 36 through the flow guide plate 33 is reduced. As a result, heat loss is reduced, and meanwhile, excessive temperature rise at an outer surface of the housing 10 due to the heat release is prevented.

In addition, the structure of the heat shield 31 is adapted to the structure of the flow guide plate 33. The drive member 32 is disposed on a side of the heat shield 31 away from the flow guide plate 33. The rotary shaft of the drive member 32 sequentially extends through the heat shield 31 and the flow guide plate 33, and then is connected to the impeller 34. At the recessed structure 3315, the heat shield 31 is provided with a recessed portion corresponding to the recessed structure 3315. The recess portion received in the recessed structure 3315, and the drive member 32 is partially received in the recess portion, thereby realizing a nested structure of the plurality of components. Thus, the structure can be made compact to reduce an overall structural volume.

In addition, a dimension of the heat shield 31 is greater than or equal to a dimension of the flow guide plate 33. The heat shield 31 is fixedly connected to the side of the top plate 14 away from the cooking chamber 11. The fixed connection comprises, but is not limited to, bonding, bonding, snap-fitting, or a connection by a connector.

In some embodiments of the present disclosure, as shown in FIGS. 8 and 9, the flow guide plate 33 has a recessed structure 3315 on the side of the flow guide plate 33 away from the top plate 14. The recessed structure 3315 is formed by pressing on the flow guide plate 33. Through the pressing, the flow guide plate 33 has a protrusion structure 3313 formed on a side of the flow guide plate 33 facing the top plate 14. The impeller 34 has a receiving groove formed on a side of the impeller 34 facing the flow guide plate 33. When the impeller 34 is connected to the drive member 32 in place, the protrusion structure 3313 is at least partially engaged into the receiving groove (the protrusion structure 3313 does not interfere with the rotation of the impeller 34).

By engaging the protrusion structure 3313 into the receiving groove of the impeller 34, the hot air assembly 30 is further formed into a nested structure. Therefore, structural compactness of the hot air assembly 30 is improved. Thus, the overall dimension of the hot air assembly 30 in the height direction of the housing 10 is reduced. As a result, the hot air assembly 30 is ultra-thin, reducing a mounting space occupied by the hot air assembly 30 in the housing 10. Consequently, the space utilization rate of the housing 10 is effectively improved.

It should be noted that in the present disclosure, the top plate 14 of the cooking chamber 11 is provided with a recessed pressed portion on a side of the top plate 14 of the cooking chamber 11 facing the impeller 34. Through the recessed pressed portion, the top plate 14 protrudes into the cooking chamber 11 on a side of the top plate 14 facing the cooking chamber 11. The impeller 34 is at least partially received in the recessed pressed portion. With the impeller 34 received in the recessed pressed portion, the hot air assembly 30 and the top plate 14 are formed into a nested structure, further making the structure of the hot air assembly 30 more compact in the height direction of the housing 10.

In addition, the structure formed by the recessed pressed portion on the side of the cooking chamber 11 facing the top plate 14 is a protrusion having an arc-shaped surface. The air outlet region 141 is positioned at the protrusion. The arc-shaped surface of the protrusion can reduce obstruction of the airflow when flowing into the heating chamber 36 through the air outlet region 141, thereby improving smoothness of the airflow. Meanwhile, the protrusion can increase an extending area of the air outlet region 141, thereby increasing an air flow rate.

In some embodiments of the present disclosure, as shown in FIG. 8, in the cavity 331 of the flow guide plate 33, the first section 3311 and the second section 3312 are sequentially disposed in the second direction Y. The first section 3311 is positioned on a side close to the door 20, and the second section 3312 is positioned on a side away from the door 20. The heating element 35 comprises at least one heating tube, and an extending direction of each of the at least one heating tube is consistent with the first direction X.

When the hot air assembly 30 operates, the airflow in the heating chamber 36 flows towards the second section 3312 from the first section 3311. By setting the extending direction of the heating tube to be in the first direction X, the airflow can be fully in contact with the airflow, thereby increasing a contact area between the heating tube and the airflow. As a result, heating uniformity of the airflow is enhanced.

It should be noted that as shown in FIGS. 8 to 10, the flow guide plate 33 has two mounting holes 332 that are opposite to each other. The heating tube has an end extending through one of the two mounting hole 332 and another end extending through another one of the two mounting holes 332. A heating part of the heating tube is located in the heating chamber 36.

In addition, the two ends of the heating tube also extend through the heat shield 31 and are respectively fixed at the heat shield 31 by fixing seats.

In addition, one, two, three, four, five, six, seven, or eight heating tubes may be provided. The heating tube may be a graphene heating tube or a resistance wire heating tube, etc.

In some embodiments of the present disclosure, as shown in FIG. 5, the heating element 35 comprises at least two heating tubes arranged in a second direction Y.

By providing the plurality of heating tubes, heating efficiency of the airflow is improved. Meanwhile, the plurality of heating tubes can further improve the heating uniformity of the airflow, thus effectively enhancing the cooking effect of food.

In some embodiments of the present disclosure, as shown in FIGS. 1 to 5, the housing 10 comprises a front plate 12 having an access opening 121, and the cooking chamber 11 is in communication with an ambient environment through the access opening 121. The user can be allowed to place food in the cooking chamber 11 or remove food from the cooking chamber 11 through the access opening 121. The door 20 is mounted at the front plate 12 and pivotally movable relative to the front plate 12. The access opening 121 of the front plate 12 can be exposed or covered when the door 200 pivots relative to the front plate 12.

As shown in FIG. 8, in the second direction Y, the air inlet region 142 is spaced apart from the air outlet region 141. The air inlet region 142 is positioned close to the door 20 (i.e., the air inlet region 142 is positioned close to the front plate 12), and the air outlet region 141 is positioned away from the door 20 (i.e., the air outlet region 141 is positioned away from the front plate 12). A minimum distance between the heating tube and the front plate 12 is defined as a first predetermined distance L ranging from 150 mm to 190 mm.

By controlling the first predetermined distance L, a sufficient distance can be maintained between the heating tube and the door 20, thereby reducing heat radiated to the door 20 by the heating tube and further lowering the temperature rise of the door 20.

It should be noted that the first predetermined distance L may be 150 mm, 160 mm, 170 mm, 180 mm, or 190 mm.

A detailed description is given below with specific experimental data.

During the experiment, the first predetermined distance L is adjusted, and the temperature of the door 20 is measured. Reference can be made to Table 2 for details.

**[Table 2]**

| Unit: mm | Temperature of door 20/°C |
|---|---|
| L=160 | 83 |
| L=170 | 78 |
| L=180 | 73 |
| L=190 | 70 |

It can be seen from the above embodiments that the temperature of the door 20 decreases as the value of L increases. Therefore, by reasonably setting the value of L, the temperature rise of the door 20 can be effectively reduced.

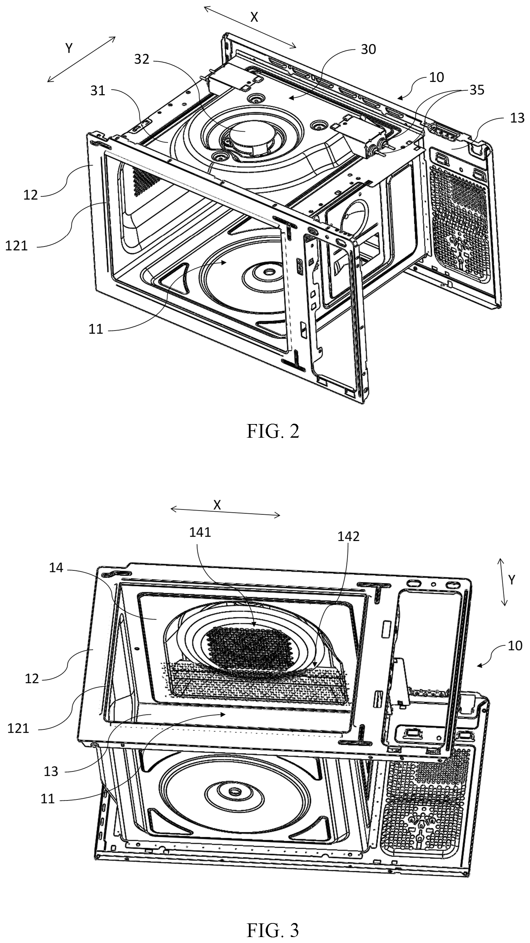

In some embodiments of the present disclosure, as shown in FIGS. 2 to 5 and FIG. 8, the housing 10 comprises a rear plate 13. In the second direction Y, the rear plate 13 is parallel to and spaced apart from the front plate 12. A distance between the rear plate 13 and the air inlet region 142 is defined as a second predetermined distance D ranging from 0 mm to 25 mm.

When the hot air assembly 30 operates, the high-temperature airflow in the heating chamber 36 flows into the cooking chamber 11 from top to bottom through the air inlet region 142. The air inlet region 142 is positioned close to the rear plate 13, and therefore the high-temperature airflow can form the Coanda effect, that is, part of the high-temperature airflow is guided to a bottom along the rear plate 13, thereby enabling preparation of a large-volume cake (such as a chiffon cake).

It should be noted that the first predetermined distance L may be 0 mm, 5 mm, 10 mm, 15 mm, 16 mm, 20 mm, or 25 mm.

A detailed description is given below with specific experimental data.

During the experiment, cake cooking is taken as an example for illustration. The second predetermined distance D is adjusted, and a temperature difference between a top and a bottom of the cake is measured. Reference can be made to Table 3 for details.

**[Table 3]**

| Unit: mm | Temperature difference between top and bottom of cake/°C |
|---|---|
| D=5 | 7 |
| D=10 | 9 |
| D=16 | 11 |
| D=20 | 15 |
| D=25 | 22 |

It can be seen from the above embodiments, the temperature difference between the top and the bottom of the cake decreases as the value of D decreases. Therefore, by reasonably setting the value of D, the temperature difference between the top and the bottom of the cake can be effectively reduced.

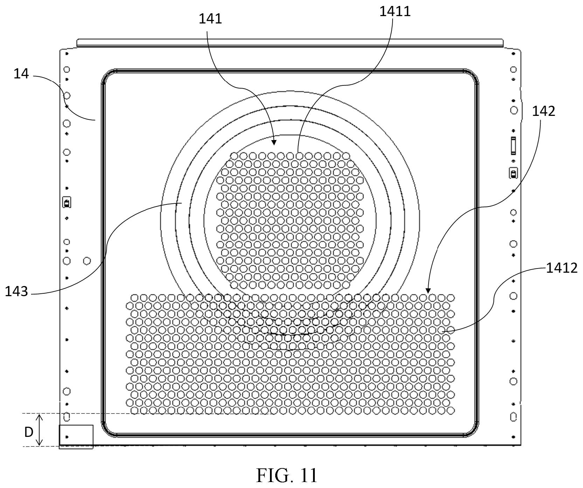

In addition, as shown in FIG. 11, at the top plate 14, openings may also be formed at the positions where the air inlet region 142 and the air outlet region 141 are formed. The openings may be used for air inflow or air outflow.

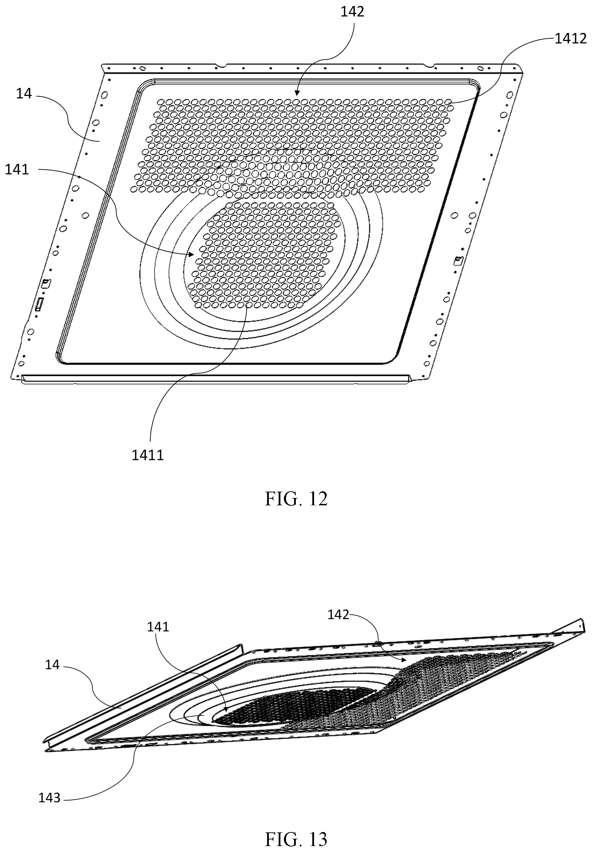

In some embodiments of the present disclosure, as shown in FIGS. 11 and 12, the air outlet region 141 has a plurality of air outlet holes 1411 uniformly distributed in the air outlet region 141. By providing the plurality of air outlet holes 1411, the air outlet region 141 can have a sufficient air outlet area to increase an air flow rate of air outflow. In addition, the plurality of air outlet holes 1411 that are uniformly arranged can improve uniformity of outlet airflow.

It should be noted that in the present disclosure, a shape of the air outlet hole 1411 comprises, but is not limited to, a circle, an ellipse, or a polygon.

In some embodiments of the present disclosure, as shown in FIGS. 11 and 12, the air inlet region 142 has a plurality of air inlet holes 1421 uniformly distributed in the air inlet region 142. By providing the plurality of air inlet holes 1421, the air inlet region 142 can have a sufficient air inlet area to increase an air flow rate of air inflow. In addition, the plurality of air inlet holes 1421 that are uniformly arranged can improve uniformity of inlet airflow.

It should be noted that in the present disclosure, a shape of the air inlet hole 1421 comprises, but is not limited to, a circle, an ellipse, or a polygon.

The above-mentioned cooking appliance may be an oven or a cooking appliance with a microwave cooking function. In the present disclosure, the above-mentioned cooking appliance is a cooking appliance with a microwave cooking function. For the structure of other parts of the cooking appliance with the microwave cooking function, reference can be made to the related art, and details thereof are omitted in the present disclosure.

While the specific embodiments of the present disclosure have been described above, the scope of the present disclosure is not limited to these embodiments. Various modifications and alternatives can be easily conceived by any of those skilled in the art without departing from the scope of the present disclosure. Therefore, these modifications and alternatives are to be encompassed by the scope of the present disclosure as defined by the claims as attached.

## Claims

1. A cooking appliance, comprising:
a housing comprising a cooking chamber, the cooking chamber having an air inlet region and an air outlet region that are provided on a top plate of the cooking chamber;
a door connected to the housing and configured to open or close the cooking chamber, the air inlet region being positioned farther away from the door than the air outlet region; and
a hot air assembly comprising:
a flow guide plate disposed on a side of the top plate away from the cooking chamber, a heating chamber being defined by the flow guide plate and the top plate, each of the air inlet region and the air outlet region being in communication with the heating chamber;
an impeller rotatably disposed in the heating chamber to drive airflow to flow towards the air inlet region from the air outlet region, a rotation axis of the impeller being perpendicular to the top plate;
a drive member disposed on an outer side of the heating chamber, a rotary shaft of the drive member extending through the flow guide plate and being connected to the impeller; and
a heating element disposed in the heating chamber and located between the impeller and the air inlet region.

2. The cooking appliance according to claim 1, wherein the flow guide plate has a cavity with an opening, the opening being closed by the top plate, the heating chamber being defined by the top plate and the cavity, and the cavity comprising a first section and a second section connected to the first section, wherein:
the first section is in communication with the air outlet region;
the impeller is at least partially disposed in the first section, a distance between a side wall of the first section and the impeller being progressively increased in a rotation direction of the impeller; and
the second section is in communication with the air inlet region, the heating element being disposed on the second section.

3. The cooking appliance according to claim 2, wherein:
the side wall of the first section is an arc-shaped wall; and
in a first direction, a first distance exists between the rotation axis of the impeller and a first side of the arc-shaped wall, and a second distance exists between the rotation axis of the impeller and a second side of the arc-shaped wall, a ratio of the second distance to the first distance ranging from 1 to 1.5,
wherein the first direction is consistent with a length direction of the housing.

4. The cooking appliance according to claim 3, wherein:
the first section has a first connection end on a side of the first section facing the second section, the first connection end being of a flared structure; and
the second section has a second connection end on a side of the second section facing the first section, the second connection end being connected to the first connection end.

5. The cooking appliance according to claim 2, wherein the rotation axis of the impeller extends through a center of the air outlet region.

6. The cooking appliance according to claim 1, wherein the flow guide plate is provided with a recessed structure on a side of the flow guide plate away from the heating chamber, the drive member being at least partially received in the recessed structure.

7. The cooking appliance according to claim 6, wherein:
the recessed structure is provided with a protrusion structure formed on a side of the flow guide plate facing the top plate; and
the impeller has a receiving groove, the protrusion structure being at least partially received in the receiving groove.

8. The cooking appliance according to claim 1, wherein the heating element comprises at least one heating tube extending in a first direction, wherein the first direction is consistent with a length direction of the housing.

9. The cooking appliance according to claim 8, wherein the at least one heating tube comprises at least two heating tubes arranged in a second direction, wherein the second direction is consistent with a width direction of the housing.

10. The cooking appliance according to claim 8, wherein the housing comprises a front plate having an access opening, the access opening being in communication with the cooking chamber to allow a user to place food in the cooking chamber or remove food from the cooking chamber, the door being pivotally connected to the front plate and configured to expose or cover the access opening, the air inlet region being positioned farther away from the front plate than the air outlet region, and a minimum distance between the front plate and the heating tube ranging from150 mm to 190 mm.

11. The cooking appliance according to claim 10, wherein:
the housing comprises a rear plate spaced apart from the front plate in a second direction; and
the air inlet region is positioned closer to the door than the air outlet region, a distance between the air inlet region and the rear plate ranging from 0 mm to 25 mm,
wherein the second direction is consistent with a width direction of the housing.

12. The cooking appliance according to any one of claims 1 to 11, wherein:
the air outlet region has a plurality of air outlet holes uniformly distributed in the air outlet region; and/or
the air inlet region has a plurality of air inlet holes uniformly distributed in the air inlet region.
